# EUROPEAN PATENT APPLICATION

(11) **EP 1 684 196 A1**
(43) Date of publication of application: **26.07.2006**
(21) Application number: 05112800.7
(22) Date of filing: 22.12.2005
(51) Int. Cl.: G06F 17/30

(54) **System and method for query refinement**

(30) Priority: 25.01.2005 US 41418
(71) Applicant: Microsoft Corporation, Redmond WA 98052 (US)
(72) Inventor: Watson, Eric B., Redmond, WA 98052 (US)
(74) Representative: Zimmer, Franz-Josef

(57) **Abstract**

A method and system are provided for automatically enhancing initial search results produced by a search engine in response to a multi-word user query. The method may include implementing a result evaluation mechanism within the search engine for evaluating adequacy of the initial search results. The method may additionally include formulating at least one alternative query, such as a sub-query, if the initial search results are deemed inadequate by the result evaluation mechanism. The method may additionally include displaying result information including the initial search results and a listing of any formulated alternative queries.

## Description

### CROSS-REFERENCE TO RELATED APPLICATIONS

None.

### STATEMENT REGARDING FEDERALLY SPONSORED RESEARCH OR DEVELOPMENT

None.

### TECHNICAL FIELD

Embodiments of the present invention relate to a technique for refining user queries and in particular to a technique for providing a user with adequate search results.

### BACKGROUND OF THE INVENTION

Through the Internet and other networks, users have gained access to large amounts of information distributed over a large number of computers. In order to access the vast amounts of information, users typically implement a user browser to access a search engine. The search engine responds to an input user query by returning one or more sources of information available over the Internet or other network.

Currently, when implementing a search engine, a user enters one or more keywords and receives a set of results. Depending upon the particular terms entered by a user, the search engine produces a number of results. In some instances, user selected terms may not lead the search engine to locate the desired information. In particular, when users enter multi-word queries, often containing too much information, the users are often disappointed with unsatisfactory or minimal results produced by the search engine.

In operation, the search engine typically implements a crawler to access a plurality of websites and stores references to those websites in an index. The references in the index may be categorized based on one or more keywords. The search engine may also store some results in a cache.

When responding to a user query, the search engine may first traverse the index in order to locate the input query terms. However, in many instances, the terms in the index may not correspond to the input query terms. The desired information may be indexed based on synonymous terms or alternative combinations of keywords. Thus, in order to receive desired search results, users may implement a trial and error technique and enter terms several times before receiving acceptable results or any results.

When existing search engines receive user input query terms that cannot be found in the index, these existing search engines typically fail to provide any results. Some existing search engines will attempt spelling corrections and reissue the search. However, if users want to search for variations of the entered terms, the users are typically required to repeat the search with different input terms.

Accordingly, a solution is needed for processing multi-word search queries that will ensure the provision of adequate results by autonomously broadening the input query based on the quantity or quality of search results returned. Preferably, such a solution would ensure that a maximum number of relevant results is obtained.

### BRIEF SUMMARY OF THE INVENTION

Embodiments of the present invention are directed to a method for automatically enhancing initial search results produced by a search engine in response to a multi-word user query. The method includes implementing a result evaluation mechanism within the search engine for evaluating adequacy of the initial search results. The method additionally includes formulating at least one alternative query if the initial search results are deemed inadequate by the result evaluation mechanism and displaying result information including the initial search results and a listing of any formulated alternative queries.

Additional embodiments are directed to a method for automatically enhancing initial search results produced by a search engine in response to a multi-word user query. The embodiments include parsing the multi-word user query into multiple sub-queries and determining validity of the multiple sub-queries by determining either a quantity of sub-query results or a relevance of sub-query results or a combination of quantity and relevance. The method may additionally include displaying the initial search results, the sub-queries, and the determined validity of the sub-queries.

In further embodiments, a system may be provided for automatically enhancing initial search results produced by a search engine in response to a multi-word user query. The system may include a result evaluation mechanism within the search engine for evaluating adequacy the initial search results. The system may additionally include an alternative query determination mechanism for formulating an alternative query if the initial search results are evaluated as inadequate by the result evaluation mechanism. The system may further include a result output component for outputting the alternative query for display along with the initial search results.

### BRIEF DESCRIPTION OF THE DRAWINGS

The present invention is described in detail below with reference to the attached drawings figures, wherein:

FIG. 1 is a block diagram illustrating an overview of a system in accordance with an embodiment of the invention;

FIG. 2 is a block diagram illustrating a computerized environment in which embodiments of the invention may be implemented;

FIG. 3 is a block diagram illustrating query refinement components in accordance with an embodiment of the invention;

FIG. 4 is a block diagram illustrating a result evaluation mechanism in accordance with an embodiment of the invention; and

FIG. 5 is a flowchart illustrating a method for refining a user query in accordance with an embodiment of the invention.

### DETAILED DESCRIPTION OF THE INVENTION

**I. System Overview**

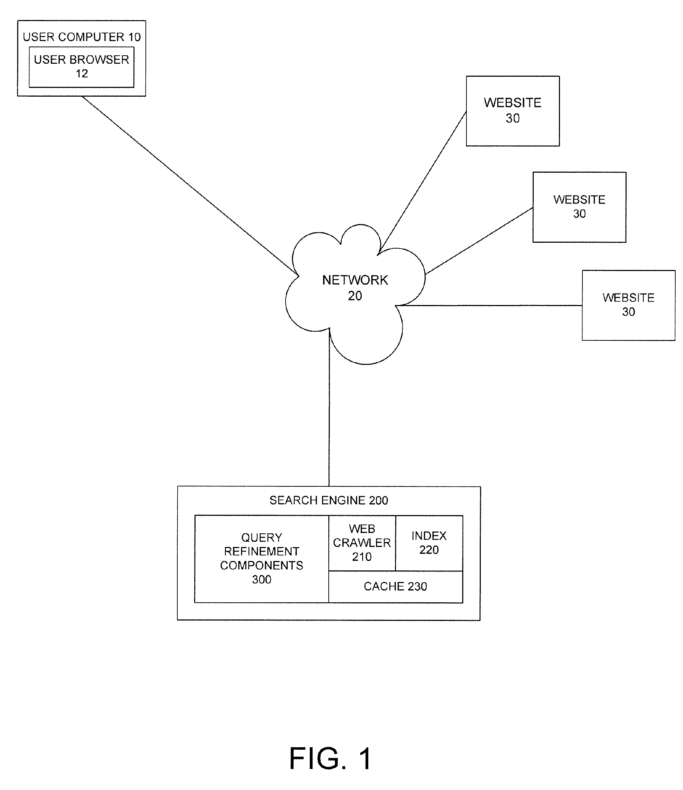

FIG. 1 is a block diagram illustrating a system overview in accordance with embodiments of the invention. A user computer 10 including a user browser 12 may be connected over a network 20 with a search engine 200. The search engine 200 may include, for example, a web crawler 210, an index 220, and a cache 230. The search engine 200 may include other standard components omitted from the description for simplicity. The search engine 200 may also include query refinement components 300. The query refinement components 300 may refine a user query from the user computer 10 and user browser 12 when the search engine 200 fails to produce adequate results. Typically, the search engine 200 will maintain the index 220 based on websites traversed by the web crawler 210, such as the websites 30.

Embodiments of the invention include a method and system for refining a user query in order to avoid dead ends encountered when a search engine fails to produce adequate results. Results may be inadequate due to being few in number or low in relevance. In operation, embodiments of the system and method may determine that results are inadequate and give the user suggestions for broadening an input query. Inadequate results may be determined through known techniques, such as evaluation of click-through rate, or alternatively may be determined based on a threshold number.

When results are deemed inadequate, the query refinement components 300 may break the multi-word query up into sub-queries. Upon the return of results for each sub-query, the query refinement components 300 may capture the relevance of the top results and number of results for the sub-query. Ultimately, the search engine 200 may output all result sets having the required number of results or with a required threshold relevance.

**II. Exemplary Operating Environment**

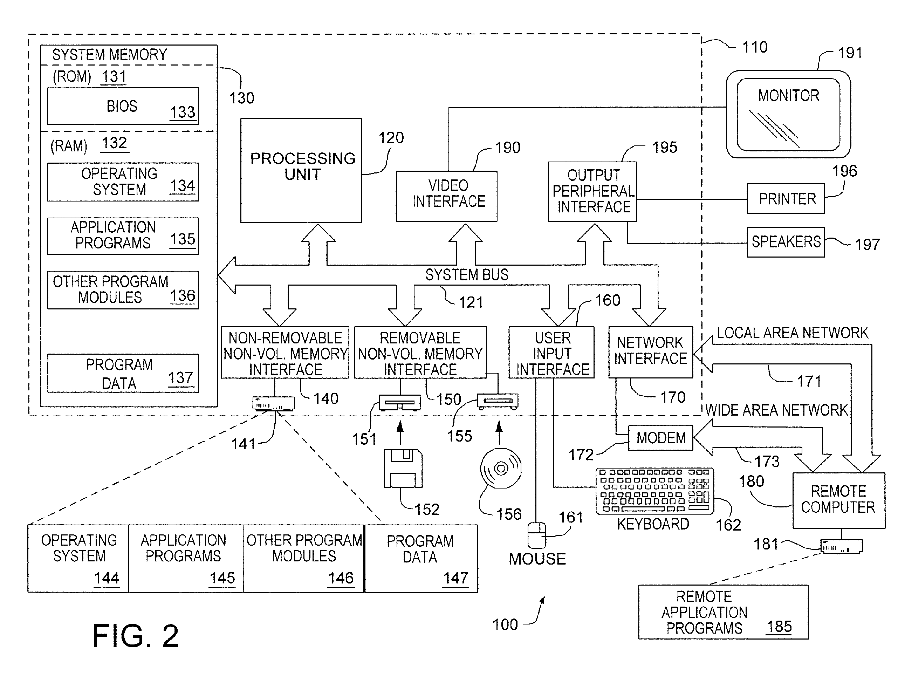

FIG. 2 illustrates an example of a suitable computing system environment 100 on which the system and method query refinement may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is described in the general context of computer-executable instructions, such as program modules, being executed by a computer. Generally, program modules include routines, programs, objects, components, data structures, etc. that perform particular tasks or implement particular abstract data types. Moreover, those skilled in the art will appreciate that the invention may be practiced with other computer system configurations, including hand-held devices, multiprocessor systems, microprocessor-based or programmable consumer electronics, minicomputers, mainframe computers, and the like. The invention may also be practiced in distributed computing environments where tasks are performed by remote processing devices that are linked through a communications network. In a distributed computing environment, program modules may be located in both local and remote computer storage media including memory storage devices.

With reference to FIG. 2, the exemplary system 100 for implementing the invention includes a general purpose-computing device in the form of a computer 110 including a processing unit 120, a system memory 130, and a system bus 121 that couples various system components including the system memory to the processing unit 120.

Computer 110 typically includes a variety of computer readable media. By way of example, and not limitation, computer readable media may comprise computer storage media and communication media. The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 2 illustrates operating system 134, application programs 135, other program modules 136, and program data 137.

The computer 110 may also include other removable/nonremovable, volatile/nonvolatile computer storage media. By way of example only, FIG. 2 illustrates a hard disk drive 141 that reads from or writes to nonremovable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/nonremovable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through an non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 2, provide storage of computer readable instructions, data structures, program modules and other data for the computer 110. In FIG. 2, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 195.

The computer 110 in the present invention will operate in a networked environment using logical connections to one or more remote computers, such as a remote computer 180. The remote computer 180 may be a personal computer, and typically includes many or all of the elements described above relative to the computer 110, although only a memory storage device 181 has been illustrated in FIG. 2. The logical connections depicted in FIG. 2 include a local area network (LAN) 171 and a wide area network (WAN) 173, but may also include other networks.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 2 illustrates remote application programs 185 as residing on memory device 181. It will be appreciated that the network connections shown are exemplary and other means of establishing a communications link between the computers may be used.

Although many other internal components of the computer 110 are not shown, those of ordinary skill in the art will appreciate that such components and the interconnection are well known. Accordingly, additional details concerning the internal construction of the computer 110 need not be disclosed in connection with the present invention.

**III. System and Method of the Invention**

As set forth above, FIG. 1 illustrates FIG. 1 is a block diagram illustrating a system overview in accordance with embodiments of the invention. User computers, such as the user computer 10 that includes a user browser 12, may be connected over the network 20 with the search engine 200. The network 20 may be the Internet or alternatively any of the types of networks described above with reference to FIG. 2.

The search engine 200 may include the web crawler 210, web index 220, and cache 230. The web crawler typically traverses websites 30 on a regular basis and indexes the websites 30 in the index 220 in order to easily access results in response to a user input query. The query refinement components 300 may evaluate and refine a user query from the user computer 10 and user browser 12 when the search engine 200 fails to produce adequate results in response to the user query. Typically, when generating results, the search engine 200 will maintain an index of traversed websites, such as the websites 30. The created index 220 may be based on keywords that appear in the traversed sites 30.

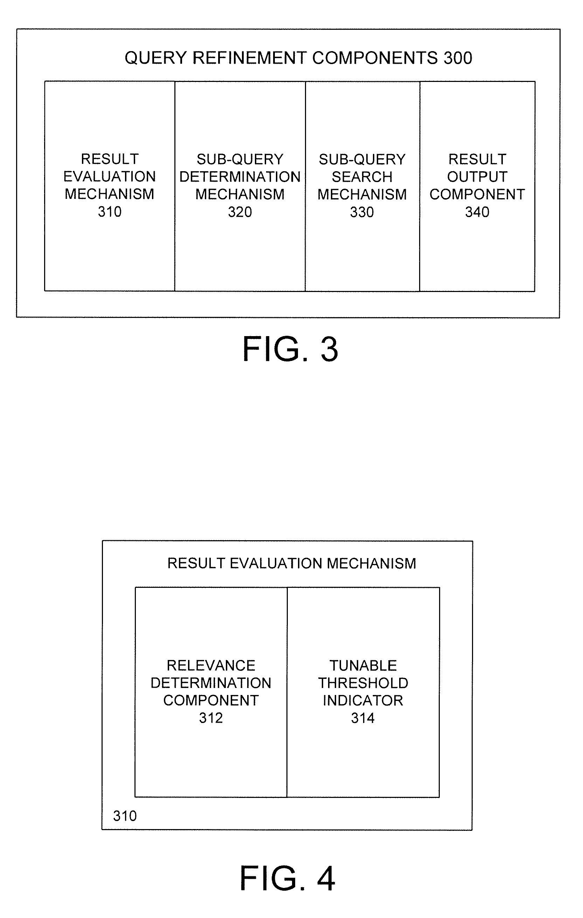

FIG. 3 illustrates further details of the query refinement components 300 in accordance with an embodiment of the invention. The query refinement components 300 may include a result evaluation mechanism 310, a sub-query determination mechanism 320, a sub-query search mechanism 330, and a result output component 340. An embodiment of the result evaluation mechanism 310 is further illustrated in FIG. 4. The result evaluation mechanism 310 may include a relevance determination component 312 and a tunable threshold indicator 314. The relevance determination component 312 may determine both whether the results retrieved for the user input query are relevant and/or whether the number of results produced is sufficient. The relevance determination component 312 may access the tunable threshold indicator 314 to make this determination. For instance, the tunable threshold indicator 314 may store a pre-set threshold number of results, such as ten results, and/or a pre-set threshold of relevance indicator or score. The relevance determination component 312 can evaluate relevance based on trackable relevance factors such as click-through rates. Related techniques exist for determining relevance based on user behavior patterns. The relevance determination component 312 may implement any known technique for determining relevance.

If the user input query does not produce results that meet the pre-determined threshold, then the result evaluation mechanism 310 may notify the sub-query determination mechanism to create sub-queries from the input queries. The sub-query determination mechanism 320 parses the user input query into individual sub-queries. The sub-query search mechanism may then search the index 220 or prompt the search engine 200 to search the index 220 for matching results. The results produced may again be evaluated by the result evaluation mechanism 310 before being forwarded to the result output component 340 for output to the user computer 10.

The sub-query determination mechanism 320 may additionally supplement its alternative sub-queries by implementing a thesaurus in order to provide synonyms. Often, terms input by the user may be indexed with alternative synonyms. Accordingly, providing a thesaurus within the sub-query determination mechanism 320 may enhance relevance of the results.

The result evaluation mechanism 310 may, upon receiving results back for each sub-query, capture the relevance of top results, for instance the top three results, and may additionally count a number of results for the query. The result output component 340 may subsequently show all the sub-queries searched along with the number of results shown or may alternatively show the queries having a relevance index higher than a pre-set threshold.

As an example, if the input query is "mini blue ipod", and the result evaluation mechanism 310, determines that the results produced from this multi-word query are inadequate, the query refinement components 300 may, through the user of the sub-query determination mechanism 320, the sub-query search mechanism 330, and the result output component 340, output alternative queries with the number of results received to the UI. For instance, in response to a user query for "blue mini ipod", the result output component 340 may output the following:

"You can also try "blue ipod" ~50k results or "Mini Ipod" ~15k results"

in addition to the results for the input query "blue mini ipod".

This example shows alternative sub-queries and the number of results produced by each of the alternative sub-queries. The sub-query determination mechanism 320 parsed the user input query "blue mini ipod" into "blue ipod" and "mini ipod". The sub-query determination mechanism 320 did not select the phrase "blue mini" as the relevance of the results for this phrase composed of two adjectives would likely be much lower than the relevance for the two above-noted phrases, each including a noun and an adjective.

Alternatively, the result output component 340 could produce the alternative sub-query accompanied by a relevance score rather than a number of results or by both a relevance score and a number of results. As suggested above, the values triggering sub-query searching and suggestions may be configurable or tunable. These values may be selected by the search engine and may be set in the tunable threshold indicator 314. In alternative embodiments, the search engine 200 may allow the user to actively tune thresholds. Under conditions of high system load, the query refinement components 300 may be either manually or automatically deactivated. The deactivation option prevents the use of the query refinement components 300 from resulting in unacceptable waiting times for search engine users.

The search engine 200 may determine how many people click on various provided selections and tune the threshold based on the number of clicks and the level of relevance. If the users only click on items or results with higher scores, then the system may reset the thresholds based on the clicks. Thus, relevance, as determined by the selected technique, triggers the display of options.

The components described above may be utilized in many contexts. In an exemplary context, the query refinement components 300 may be utilized in an online shopping environment. For example, a user may input a query such as "Digital Camera, Price<$200, manufacturer = cannon". If this query returns an inadequate result set, the query refinement components 300 may be implemented to broaden the query to include, for example, Cannon cameras between 200 and 250 dollars or cameras under 200 dollars manufactured by other companies. The sub-query determination mechanism 320 may implement a system to determine which criteria to relax. In some situations, relaxing the price may yield more results and results having a higher relevance score. In other situations, the brand or other criteria may be the appropriate criteria to relax.

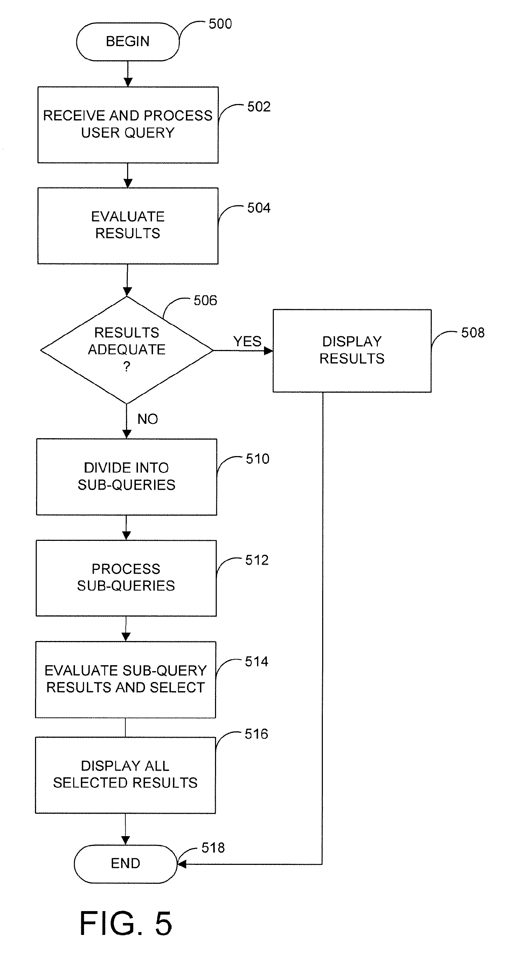

FIG. 5 is a flow chart illustrating a method for query refinement in accordance with an embodiment of the invention. The method begins in step 500 and the search engine 200 receives and processes an input user multi-word query in step 502. In step 504, the query refinement components 300 evaluate the results of the processing step. If the results are deemed adequate in step 506, the search engine 200 displays results in step 508. As set forth above, adequacy may be determined based on the quantity, quality, or combination of quantity and quality of results produced.

If the results are not deemed adequate in step 506, the query refinement components 300 divide the query into sub-queries in step 510. In step 512, the query refinement components 300 process the sub-query. In step 514, the query refinement components 300 evaluate the results of the sub-query processing and select the appropriate results. In step 516, the search engine 200 displays all selected results and the process ends in step 518.

While particular embodiments of the invention have been illustrated and described in detail herein, it should be understood that various changes and modifications might be made to the invention without departing from the scope and intent of the invention. The embodiments described herein are intended in all respects to be illustrative rather than restrictive. Alternate embodiments will become apparent to those skilled in the art to which the present invention pertains without departing from its scope.

From the foregoing it will be seen that this invention is one well adapted to attain all the ends and objects set forth above, together with other advantages, which are obvious and inherent to the system and method. It will be understood that certain features and sub-combinations are of utility and may be employed without reference to other features and sub-combinations. This is contemplated and within the scope of the appended claims.

## Claims

1. A method for automatically enhancing initial search results produced by a search engine in response to a multi-word user query, the method comprising:
implementing a result evaluation mechanism within the search engine for evaluating adequacy of the initial search results;
formulating at least one alternative query if the initial search results are deemed inadequate by the result evaluation mechanism; and
displaying result information including the initial search results and a listing of any formulated alternative queries.

2. The method of claim 1, wherein implementing the result evaluation mechanism comprises evaluation at least one of a quantity and relevance of the initial results.

3. The method of claim 1, wherein formulating the at least one alternative query comprises formulating at least one sub-query from the multi-word user query.

4. The method of claim 3, further comprising formulating multiple sub-queries.

5. The method of claim 4, further comprising determining at least one of a quantity and a relevance of sub-query results.

6. The method of claim 5, further comprising displaying at least one of the quantity and the relevance of the sub-query results.

7. The method of claim 1, further comprising formulating the at least one query if the initial search results fall below one of a relevance and quantity threshold.

8. The method of claim 7, further comprising providing a tunable threshold for triggering the formulation of the at least one alternative query.

9. The method of claim 1, further comprising eliminating the formulation of alternative queries during high usage periods.

10. A method for automatically enhancing initial search results produced by a search engine in response to a multi-word user query, the method comprising:
parsing the multi-word user query into multiple sub-queries;
determining validity of the multiple sub-queries by determining one of a number of sub-query results and a relevance of sub-query results; and
displaying the initial search results.

11. The method of claim 10, further comprising displaying the sub-queries and the determined validity of the sub-queries.

12. The method of claim 10, further comprising displaying only sub-queries having a determined validity value exceeding a pre-selected threshold value.

13. The method of claim 10, further comprising evaluating the validity of the initial search results by evaluating one of a quantity and a relevance of the initial search results.

14. The method of claim 13, further comprising parsing the multi-word query if the initial search results fall below one of a relevance and quantity threshold.

15. The method of claim 14, further comprising displaying at least one of the quantity and the relevance of the sub-query results.

16. The method of claim 14, further comprising providing a tunable threshold for triggering the parsing of the multi-word query.

17. A system for automatically enhancing initial search results produced by a search engine in response to a multi-word user query, the system comprising:
a result evaluation mechanism within the search engine for evaluating adequacy the initial search results;
an alternative query determination mechanism for formulating an alternative query if the initial search results are evaluated as inadequate by the result evaluation mechanism; and
a result output component for outputting the alternative query for display along with the initial search results.

18. The system of claim 17, wherein the result evaluation mechanism comprises a mechanism for evaluation of at least one of a quantity and relevance of the initial results.

19. The system of claim 17, wherein the alternative query formulation mechanism formulates at least one sub-query from the multi-word user query.

20. The system of claim 19, wherein the sub-query evaluation mechanism includes components for determining at least one of a quantity and a relevance of sub-query results.
